# NEW EUROPEAN PATENT SPECIFICATION

(11) **EP 0 491 391 B2**
(45) Date of publication and mention of the opposition decision: **03.04.2002**
(45) Mention of the grant of the patent: 08.05.1996
(21) Application number: 91121737.0
(22) Date of filing: 18.12.1991
(51) Int. Cl.: C07F 9/38, C02F 5/14, C11D 3/36

(54) **Water treatment agent**
Wasserbehandlungsmittel
Agent pour le traitement de l'eau

(30) Priority: 18.12.1990 GB 9027357; 08.05.1991 GB 9109861; 06.11.1991 GB 9123501
(43) Date of publication of application: 24.06.1992
(73) Proprietor: Rhodia Consumer Specialties Limited, Oldbury, West Midlands B68 0NN (GB)
(72) Inventor: Davis, Keith Philip, Stourbridge, West Midlands DY7 6BP (GB); Hoye, Peter Albert Theodore, Stourbridge, West Midlands DY7 6LL (GB); Williams, Michael John, Bridgnorth, Shropshire WV15 4DR (GB); Woodward, Gary, Hereford & Worcester DY10 3AH (GB); Greenhall, Martin Paul, Northfield, Birmingham B31 1AF (GB)
(74) Representative: Kinton, Colin David

(56) References cited:
- EP-A- 0 360 747
- DE-A- 3 142 517
- GB-A- 1 458 235
- US-A- 2 957 931
- US-A- 3 743 688
- US-A- 3 755 504
- US-A- 4 239 648
- US-A- 4 681 686
- JOURNAL OF THE AMERICAN CHEMICAL SOCIETY. vol. 92, no. 6, 25 March 1970,GASTON, PA US pages 1685 - 1687; W.A. CILLEY: 'Propane-1,2,3-triphosphonic acid and butane-1,2,3,4-tetraphosphonic acid'

## Description

The present invention relates to a novel method of phosphonation which is particularly useful for the preparation of water treatment agents that inhibit scale formation and/or corrosion of metal, e.g. iron, surfaces by aqueous systems, such as boiler water. The invention relates especially to certain novel agents which are effective when present in very low concentrations e.g. 0.1 to 100 ppm.

Such agents, on account of the minimum concentrations required for effective action, are known as threshold agents. The threshold levels are typically very much lower than would be required to achieve useful protection by a stoichiometric reagent such as a classical chelating agent.

While a large number of threshold agents are known, some of which are both scale inhibitors and corrosion inhibitors, the most effective and commercially acceptable scaling inhibitors are relatively ineffective, and are not used commercially, as corrosion inhibitors and vice versa. One group of compounds, which has been reported to show scale and corrosion inhibiting properties, is phosphonosuccinic acid and its salts. These are not, however, sufficiently effective to have enjoyed significant commercial success. The compound has been fairly expensive to make by the conventional route, which entails reacting a diester of maleic acid with dimethyl phosphite to form a phosphonosuccinic ester intermediate. The intermediate is then hydrolysed.

A particularly successful class of scale inhibitors is 2-phosphono-1,2,4-tricarboxybutane and its salts which will be referred to collectively herein as "PTCB". This is prepared by reacting the above described phosphonosuccinic ester intermediate with methyl acrylate to form the ester of the desired product, which must then be hydrolysed. This is a very expensive process on account both of the cost of the reagents and the number of steps involved. Nevertheless it has been commercially successful in competition with much cheaper products because it is effective in particularly low concentration and is said to be useful in the treatment of certain problem water systems, which cannot be effectively treated by other scale inhibitors. PTCB is not, however, normally used commercially as a corrosion inhibitor.

The most cost effective and commercially successful organic corrosion inhibitors in current use are 2-hydroxy-2-phosphonoacetic acid, (HO)₂PO CHOH.COOH, and its salts, hereinafter collectively referred to as HPP. HPP has some major drawbacks as a corrosion inhibitor, in that it is relatively ineffective in the presence of zinc, which is widely used in water treatment, and in chlorinated water systems. It is not very effective as a scale inhibitor.

The phosphonation of water-insoluble long chain olefins in a non-aqueous solvent, with phosphorous acid and a free radical catalyst, has been known since 1965 from a paper by Yoshiki Okamoto and Hiroshi Sakurai in Kogyo Kayaka Zasshi 68, 11 (1965). The products have not been reported to be useful as corrosion or scaling inhibitors.

Attempts to phosphonate more reactive, water-soluble olefins such as acrylic or maleic acid with phosphorous acid have given negligible yields of phosphonated products.

GB 1458235 describes the preparation of certain scale inhibitors based on similar chemistry to the Japanese paper. The products are prepared, typically, by reacting hypophosphorous acid with acrylic acid. However two examples, namely examples H and I, describe an alleged reaction of phosphorous acid with acrylic acid, in the presence of a catalytic amount of potassium persulphate. The products are not specifically identified but is implied, on the basis of their phosphorus analysis, that they are phosphonated oligomers of acrylic acid. The performances of these reaction products as scale inhibitors are mentioned in the Table 1 on p.6 of the patent. This Table shows that they are markedly inferior to the other examples of the invention quoted in the Table and indeed not significantly more effective than commercial polyacrylic acid which is quoted as a comparative example.

The latter observation is, in fact, easily explained. We have repeated examples H and I of GB1458235 and discovered that the reaction product is in fact polyacrylic acid. NMR confirms the absence of any P-C bonds. Presumably the Patentee had failed to remove all inorganic impurities before conducting its analysis.

The failure of phosphorous acid to give useful yields of effective phosphonated water treatment agents with unsaturated carboxylic acids, has led to the abandonment of this approach and reliance instead on the costly multi stage routes using phosphite esters and carboxylate esters.

There are many references in the art to the use of phosphono carboxylic acids in water treatment and their preparation starting from alkylphosphites. They include US 2 478 390, US 2 957 931, US 3 923 876, US 3959 168, US 4 042 324, US 4 057 511, US 4 351 796 and DE-A-3 044 214, US 3 743 688, US 3 755 504, EP 360 747.

The synthesis of propane-1,2,3-triphosphonic acid and butane-1,2,3,4-tetraphosphonic acid via the formation of alkyl phosphonates is described in the J.Am. Chem.Soc., 92, 6, pages 1685-1687.

We have now discovered that lower molecular weight (e.g. less than 10 carbon atom) olefins and acetylenes, especially water soluble hydroxy olefins and acetylenes and salts of carboxy olefins and acetylenes such as alkali metal salts, (e.g. propiolates, acrylates and/or maleates or allyl or propargyl alcohol) react with water soluble phosphites in aqueous solution, usually at elevated temperatures, in the presence of free radicals to form high yields of novel products which are generally very much cheaper to make than conventional phosphonated products such as PTCB and yet are at least comparable to the latter, and in some cases superior, in performance as scale inhibitors.

Moreover the products are also highly effective as corrosion inhibitors, especially in the presence of calcium ion. They are in many cases substantially superior to HPP in the presence of chlorine and of the hypochlorite or hypobromite commonly present in chlorinated water systems and/or in the presence of chlorine dioxide. The products are also more effective as corrosion inhibitors than HPP in the presence of zinc ions.

Particularly preferred are the reaction products obtained with maleates, acrylates or mixtures thereof, or propargyl alcohol. In the case of maleates, the product is generally a mixture of a phosphonosuccinate salt with previously unreported components which we believe include members of the homologous series of the general formula H(CHCO₂M. CHCO₂M)ₙ PO₃M₂ wherein n usually has an average value of 2 to 5 and M is a cation. Typically the mixture may comprise a phosphonosuccinate (n=1) and a substantial proportion of the higher homologues. It is also possible that hydroxy and/or sulphate substituted oligomers are formed. The mixture usually contains a small proportion of phosphate.

According to the present invention either the products of the foregoing reactions or any of their novel components, e.g. oligomers of the above formula, may be used as scaling inhibitors or as corrosion inhibitors.

According to a first embodiment the invention provides a method of phosphonating a compound having a C-C double or triple bond adjacent to at least one hydroxyl, carbonyl, carboxylate, sulphonate, and/or phosphonate group by reacting it with a water soluble phosphite salt at a pH of at least 5 in the presence of free radical said pH and said free radical being sufficient to convert a substantial proportion of said compound to a phosphonated derivative and a solvent, capable of dissolving the reagents, in an amount sufficient to dissolve at least part of the reaction mixture.

The term "active, unsaturated compound" includes ethylenically and acetylenically unsaturated compounds in which the unsaturated bond is activated by the proximity of at least one hydroxyl, carbonyl, carboxylate, sulphonate and/or phosphonate group or by inclusion in a strained ring. Preferred examples include alkali metal maleates, acrylates, propiolates, butyne-1, 4 dioates, butyne-1, 4-diol, propargyl alcohol, vinyl sulphonate, vinyl phosphonate, allyl alcohol, norbornene and cyclopentadiene.

Thus according to a preferred form of the first embodiment, the invention provides a method for the preparation of scaling and/or corrosion inhibitors which comprises heating: (1) at least one water soluble carboxy, hydroxy, sulphono or phosphono olefin having the general formula R₂C=CR₂ where at least one R group is a COOM, CH₂OH, SO₃M or PO₃M₂ group and each of the other R groups may be the same or different and each represents hydrogen or a hydrocarbon or substituted hydrocarbon group, or in which two of the R groups together form a cycloalkyl or cycloalkenyl group, or part thereof; and M is a cation such that the salt is water soluble; with (2) a water soluble salt of phosphorous acid; in the presence of (3) sufficient of an aqueous based solvent to dissolve at least part of each of the reagents; and (4) sufficient free radicals to form a phosphonated oligomer of said olefin.

The invention, according to a preferred embodiment, provides a novel phosphonated oligomer of maleic acid, of the formula H(CHCO₂M.CHCO₂M)ₙPO₃M₂ where n is greater than 1 and M is a cationic species such that the compound is water soluble, and especially mixtures of such compounds with phosphonosuccinic acid or its water soluble salts, often in a minor proportion by weight based on the total weight of the solvent-free mixture.

It is particularly preferred, according to the invention, to use reaction products which comprise: up to 50% by weight of a phosphonosuccinate based on the weight of the solvent-free composition; a phosphonated dimer of maleate; optionally a minor proportion by weight, relative to the weight of dimer, of higher phosphonated oligomers of maleate; and from 0.5 to 5% by weight of alkali metal phosphate.

In particular the invention provides a method for the treatment of potentially scale forming aqueous systems, or of potentially corrosive aqueous systems, to inhibit scaling or corrosion respectively, which comprises adding thereto a threshold amount (e.g. an effective amount less than 100 ppm by wt.) of a novel compound or mixture of compounds according to the invention.

The invention further provides a method for the preparation of a compound or mixture of compounds of the invention, which comprises reacting together water soluble salts of maleic and phosphorous acids in aqueous solution and in the presence of an effective amount of a free radical initiator, and preferably in an aqueous based solvent.

Examples of acetylenically unsaturated compounds which may be used in the method of our invention include propargyl alcohol, propiolates, buta-2,3-yne-1,4-dioates, and other acetylenically unsaturated alcohols, carboxylate salts and hydroxycarboxylate salts having less than 10 carbon atoms.

Important differences between the preferred methods of the present invention, and prior art attempts to prepare phosphonates from olefins using phosphorous acid, include: the use of an aqueous based solvent and the use of salts rather than free acids. The reaction preferably is run at neutral or alkaline pH. Elevated temperatures are preferred and the amount of free radical initiator required is often substantially more than is usually used in free radical catalysed reactions. The initiator is preferably dosed continuously or intermittently to the reaction mixture to the extent required to keep the reaction going to completion.

The method of the invention preferably employs alkali metal salts of any acid reagents, e.g. an alkali metal propiolate, acrylate, methacrylate and/or maleate and a di-alkali metal phosphite. In each case the alkali metal is preferably sodium, but other cations which form soluble phosphites and which do not interfere with the reaction may be used. Examples include calcium, potassium, lithium and magnesium. Phosphonium (eg. tetra alkyl or tetrakis hydroxymethyl), ammonium and substituted ammonium such as tetramethyl ammonium and/or mono-,di- and/or tri- ethanolammonium may also be used, but are not preferred.

The proportion of phosphite to unsaturated compound is preferably substantially stoichiometric, i.e. equimolar in the case of ethylenically unsaturated compounds or 2:1 molar in the case of acetylenes. A small excess of either reagent may be present, however substantial excesses of the phosphite are generally undesirable. Excesses of the unsaturated compound generally result in the formation of unphosphonated oligomers. Since the latter are usually effective water treatment agents in their own right, and are often useful synergists with the phosphonated products of this invention, comparatively large excesses of the unsaturated agent can be tolerated.

Preferably the mole ratio of ethylenically unsaturated compound to phosphite is from 1:5 to 15:1, usually 1:1 to 3:1, especially 1.3:1 to 2.5:1 e.g. 1.5:1. Generally, higher proportions of phosphite to unsaturated compound will be required to phosphonate acetylenes. For instance the proportion of phosphite to acetylene may be from 10:1 to 1:10, usually 5:1 to 1:8, especially 3:1 to 1:5, e.g. 2.5:1 to 1:2, preferably 2:1 to 1:1.

The unsaturated compound is preferably a maleate, acrylate or a mixture thereof or a propiolate or allyl or propargyl alcohol. Other olefins and acetylenes include methacrylate, vinyl sulphonates, vinyl phosphonates, 2,3-butyne-1,4-diol,butyne-1,4-dioates, 2,3-butyne-1-ol-4-oates,nor-bornene, vinyl acetate, 2,3-butene-1,4-diol and 2,3-butene-1-ol-4oates. Compared with maleates, fumarates have been found comparatively unreactive.

We prefer to carry out the preparations at a concentration of the reagents at which the reaction mixture will just remain fully dissolved and stirrable at the reaction temperature.

The reaction may, however, be carried out in the presence of sufficient solvent to dissolve only part of the reagents, but sufficient, preferably, to form a stirrable slurry. For instance amounts of total solids may be from 0.5 to 96% by weight of the reaction mixture, more usually 1 to 95% e.g. 10 to 90%, especially 20 to 85%, preferably 35 to 80%, more preferably 50 to 80%, for example 60 to 78% or 70 to 75%.

The desired concentration may conveniently be achieved by dissolving the reagents in, e.g. water, and evaporating down, e.g. until the mixture is still just stirrable, or by heating a mixture of phosphorous acid and the unsaturated compounds and neutralising with hot concentrated base such as sodium hydroxide, prior to adding the free radical initiator.

The reaction requires a source of free radicals for the system, e.g. an ammonium or alkali metal persulphate or peracetate, hydrogen peroxide, a hydroperoxide, chlorine dioxide, sodium chlorate, sodium hypochlorite, organotin hydrides, azo compounds such as 4,4'-azobiscyanovaleric acid, electrolysis, ultra violet or other ionising radiation or ultrasound, or any combination of the foregoing.

The amount and rate of formation of free radical generated determines the extent to which the reaction may proceed and the time required.

Preferably the amount of free radical initiator is sufficient to take the reaction to completion in reasonable time (e.g. within 0.25 to 24 hours). Smaller amounts may be used if incomplete reactions can be tolerated. Generally the quantity of free radical required is substantially greater than in normal free radical catalysed reactions. Excess free radical source is, however, preferably avoided on economic grounds and to minimise contamination of the product. Generally the more water present, the more free radical is required in order to complete the reaction. Also, more elevated temperatures may permit the reaction to proceed with less addition of free radicals. We therefore prefer to use a concentrated reaction mixture e.g. at least 60% and preferably more than 70% total solids. Under these conditions the amount of initiator required is typically from 1 to 10 mole% e.g 2 to 8 and preferably from 3 to 6 mole% based on the unsaturated reagent. However if the reaction is performed in a more dilute system, and/or at lower temperatures, higher amounts of initiators such as sodium, potassium or ammonium persulphate may be required, typically from 10 to 30% by weight of the unsaturated reagent, e.g. 20 to 25%.

The reaction mixture is preferably at a pH at least neutral, or slightly alkaline. Acid pH should be avoided. Typically pH should be above 5 and especially above 5.5 preferably above 6 more preferably above 6.5 e.g. 6.8 to 10 most preferably 7 to 9 at least initially, although the pH may be allowed to drop below 7 as the reaction approaches completion.

The reaction normally procedes in an aqueous based solvent which is typically water, provided the selected reagents are sufficiently soluble. Water miscible organic solvents may be included, where required for more sparingly soluble reagents. The solvent should contain sufficient water to dissolve the phosphite to a substantial extent. The organic solvent may for example comprise methanol, ethanol, iso-propanol, ethylene glycol, propylene glycol, a water soluble oligomer of ethylene or propylene glycol such as diethylene glycol, a water soluble mono- or di- ether of ethylene or propylene glycol or of an oligomer thereof, such ethylene glycol monomethyl ether, ethylene glycol dimethyl ether, diethylene glycol monomethyl ether or diethylene glycol mono ethyl ether, glycerol, a water soluble glyceryl ether, acetone, and/or dioxan. The requirement to dissolve the phosphite and the olefin or acetylene in the same aqueous based solvent is the main limitation on choice of unsaturated reagent. In cases of difficulty it may be possible to carry out the reaction in anhydrous dioxan.

The reaction mixture generally requires heating for at least part of the reaction time in order to initiate and maintain the reaction. Preferably temperatures above 60°C, more preferably above 80°C, e.g. 90°C to the boiling point of the mixtures are used, and maintained for from 30 mins to 8 hours in order to complete the reaction. Higher temperatures, e.g. under pressure, for example in an autoclave, may be advantageous. Typically the temperature is between 50 and 250°C e.g. below 200°C and preferably below 150°C. Optimum temperatures are usually in the range 95 - 140°C e.g. 100 - 130°C.

We prefer that the reaction should be carried out under an inert atmosphere, e.g. nitrogen. This helps to improve the yield of product.

The reaction may be carried out batchwise, semi-continuously or continuously e.g. in a pipe reactor. The free radical source may all be added initially or, preferably, in a plurality of additions, or continuously or semi-continuously throughout the reaction.

To maximise the yield of phosphonated product it is sometimes necessary to add the unsaturated reagent, continuously or intermittently during the reaction period to an aqueous solution of the phosphite.

The product typically contains a proportion, e.g. in the case of maleates, up to about 40%, by weight thereof, of the phosphonated monomer (e.g. phosphonosuccinate) the remainder comprising a phosphonated dimer possibly with small amounts of higher homologues, and inorganic salts such as phosphates.

In view of the fact that phosphonosuccinic acid and its salts are relatively poor scale and corrosion inhibitors, we attribute the strikingly enhanced performance of our novel reaction products, or at least those derived from maleates, to the presence either of higher homologues or of chemically modified oligomers, e.g. hydroxyl or sulphate derivatives and/or to the presence of inorganic phosphate. We believe that certain of these homologues may be inherently superior to phosphonosuccinates as scale and corrosion inhibitors. We also believe that there is synergistic action between the components of our novel reaction products.

The compounds or mixtures of our invention are of particular value as corrosion inhibitors in systems containing calcium ions and may also be used in conjunction with zinc salts.

The products are effective in the presence of chlorine, chlorine dioxide, bromine, hypochlorite, hypobromite and other oxidising biocides. They may therefore be used to treat chlorinated water systems or systems sterilised by other oxidising agents. They are useful in cooling water treatment, treatment of industrial process water, boiler water treatment, desalination plant and for treating water used or produced in oil wells including injection water, produced water, and water used for hydrostatic testing of pipelines.

They are also of value as detergent builders or auxiliary builders, e.g. in conjunction with zeolites, or as metal chelating agents, e.g. in metal extractions. They may be used in aqueous based functional fluids such as hydraulic fluids, lubricants, cutting fluids and oil field drilling muds.

For example the compounds and mixtures of the invention may be used in squeeze treatment of oil wells in conjunction with calcium salts, or may be added to drilling muds or to oilfield injection water, produced water or water for hydrostatic testing, as well as to various industrial cooling waters and process waters and to water for use in central heating systems. They are especially effective in preventing barium sulphate scale.

Squeeze treatment of boreholes, eg. to prevent formation of BaSO₄ scale, typically entails impregnating the formation in the environs of the hole with a calcium salt of the inhibitor, which is subsequently leached into any aqueous system circulating in the hole to provide controlled slow release.

For example in oil wells the hole is flushed out with aqueous surfactant to provide a water wettable surface and then impregnated with a solution of the inhibitor. The calcium salt is formed in situ either by calcium in the formation, where the latter comprises limestone, or by subsequent treatment of the hole with an aqueous calcium salt, e.g. where the formation comprises sandstone.

The compounds and mixtures are useful in treating chlorinated water systems for which many threshold agents are ineffective. Effective concentrations may typically range from 0.1 to 50 ppm depending on the nature of the aqueous system, preferably 0.5 to 20 ppm especially 1 to 10 ppm e.g. 1.5 to4 ppm.

Products according to the invention may be used in combination with one another, and/or in conjunction with other water treatment agents including: surfactants, such as anionic surfactants (eg. C₁₀₋₂₀ alkyl benzene sulphonates, C₁₀₋₂₀ olefin sulphonates, C₁₀₋₂₀ alkyl sulphates, C₁₀₋₂₀ alkyl 1 to 25 mole ether sulphates, C₁₀₋₂₀ parafin sulphonates, C₁₀₋₂₀ soaps, C₁₀₋₂₀ alkyl phenol sulphates, sulphosuccinates, sulphosuccinamates, lignin sulphonates, fatty ester sulphonates, C₁₀₋₂₀ alkyl phenyl ether sulphates, C₁₀₋₂₀ alkyl ethanolamide sulphates, C₁₀₋₂₀ alpha sulpho fatty acid salts, C₁₀₋₂₀ acyl sarcosinates, isethionates, C₁₀₋₂₀ acyl taurides, C₁₀₋₂₀ alkyl hydrogen phosphates), non-ionic surfactants (eg. ethoxylated and/or propoxylated C₁₀₋₂₀ alcohols, ethoxylated and/or propoxylated C₁₀₋₂₀ carboxylic acids, alkanolamides, amine oxides, and/or C₁₀₋₂₀ acyl sorbitan and/or glyceryl ethoxylates) amphoteric surfactants (eg. betaines, sulphobetaines, and/or quaterised imidazolines), and/or cationic surfactants (eg. benzalkonium salts, C₁₀₋₂₀ alkyl trimethyl ammonium salts, and/or C₁₀₋₂₀ alkyl trimethyl or tris(hydroxymethyl) phosphonium salts); sequestrants, chelating agents, corrosion inhibitors and/or other threshold agents (eg. sodium tripolyphosphate, sodium ethylenediamine tetracetate, sodium nitrilo triacetate, tetra potassium pyrophosphate, acetodiphosphonic acid and its salts, ammonium trismethylene phosphonic acid and its salts, ethylenediamine tetrakis (methylene phosphonic) acid and its salts, diethylenetriamine pentakis (methylene phosphonic) acid and its salts); tolyltriazole and mixtures of nitrate, benzoate, HHP and/or PTCB) biocides (eg. tetrakis (hydroxymethyl) phosphonium salts, formaldehyde, glutaraldehyde); oxidising biocides and/or bleaches (eg. chlorine, chlorine dioxide, hydrogen peroxide, sodium perborate); foam controlling agents such as silicone antifoams; oxygen scavengers such as hydrazines and/or hydroxylamines; pH controlling and/or buffering agents such as amines, borates, citrates and/or acetates; chromium salts; zinc salts; and/or other water treatment agents such as polymeric dispersants and coagulants including polymaleic, polyacrylic and polyvinylsulphonic acids and their salts, starches and/or carboxy methyl cellulose, and/or molybdates. The invention provides formulations comprising an effective amount of a product of the invention as aforesaid and any of the aforesaid known water treatment agents. Such formulations may, for example, contain from 5 to 95% by weight of a product of the invention and from 5 to 90% by weight of one or more of any of the aforesaid water treatment agents.

Detergents according to this invention may comprise 2 to 70%, preferably 3 to 50% eg. 5 to 20% by weight surfactant and 5 to 60%, preferably 10 to 45% eg. 15 to 30% by weight total builder, the major portion of any balance being typically a carrier, solvent or diluent.

The builder may consist of a phosphono or diphosphono product according to this invention. Alternatively the builder may comprise such a product together with one or more other builders such as zeolite, sodium tripholyphophate, potassium pyrophosphate sodium or potassium carbonate, sodium citrate, sodium nitrilotriacetate, sodium silicate and or sodium ethylene diamine tetracetate. Thus the product of the invention may consitute from 1% to 100% of the total builder, eg. 5 to 90% especially 10 to 80%. The balance may comprise an inert solid such as sodium sulphate, or a liquid medium such as water or a low molecular weight polyethlene glycol. The detergent may additionally comprise: up to 5% by weight, eg. 0.01 to 2% by weight, of optical brightener; up to 5% by weight e.g. 0.01 to 2% by weight of soil suspending agent such as sodium carboxymethyl cellulose; and up to 6%, more usually up to 2%, by weight, each, of perfume, dye, enzyme, bleach, buffers and other conventional ingredients of solid or liquid detergent composition.

The invention will be illustrated by the following examples. All preparations were carried out under an atmosphere of nitrogen.

The evaluations were performed in accordance with the following test methods:

### Test Method No. 1

Synthetic seawater brine having total CO₂ content of 100mg.1⁻¹ is prepared to the following formulation:

| **Formulation** | |
|---|---|
| Component | Concn.(g.1⁻¹) |
| NaCl | 49.06 |
| MgCl₂.6H₂O | 22.21 |
| Na₂SO₄ | 8.18 |
| CaCl₂.2H₂O | 3.074 |
| KCI | 1.390 |
| KBr | 0.202 |
| NaHCO₃ | 0.191 |
| pH | 8 |

500ml of synthetic seawater concentrate and the appropriate amount of a 0.5gm/litre stock solution of the inhibitor are heated to, and maintained at, 80°C and pH adjusted to 8.00 + 0.01. 0.125gm of precipitated calcium carbonate, having 60% by weight aragonite and 40% calcite, is added and the pH monitored for 60 minutes.

If no drop in pH greater than 0.1 units is observed the inhibitor is providing 100% inhibition of aragonite scaling. The test is repeated until the minimum (threshold) concentration for 100% inhibition has been determined.

### Test Method No. 2

Synthetic formation water is prepared, having the Formula:

| | |
|---|---|
| NaCl | 110.08 g |
| Na₂SO₄ | 16.265g |
| NaHCO₃ | 5.25 g |
| MgCl₂6H₂O | 35.55 g |
| CaCl₂²H₂O | 9.535g |
| SrCl₂6H₂O | 0.26 g |
| KCI | 2.955g |
| H₃BO₃ | 0.43 g |
| pH | 7.8 |

The synthetic formation water is seeded with precipitated calcium carbonate and pumped through a 1/16 inch bore capillary tube at 90°C and at a rate of 25ml/min until the pressure across the tube reached 5psi. The inhibitor is observed to determine any continuing rise. The minimum concentration of inhibitor to stop further rise of pressure is determined.

### Test Method Nos. 3 and 4

These tests are based on the measurement of linear polarisation using an "ELECTROCHEMICAL INTERROGATOR" to determine the corrosion current. The rate of corrosion is expressed in mm per year of iron lost from the surface of the carbon steel work electrode. The auxiliary electrode is platinium and the reference electrode saturated calomel. The calcium test (Method 3) used a medium containing 120ppm Ca++ and 213 ppm Cl` at a pH of 7.5 and a temperature of 25°C.

The zinc test (Method 4) used a medium containing 20 ppm Zn++, 200 ppm Cl`, a pH of 7.5 and a temperature of 25°C.

Both tests used 60 ppm inhibitor (expressed as the acid) and swept from -20mv to +20mv with respect to rest potential in 1 minute.

### Example 1:

A solution of maleic acid (1.74Kg, 15M) and sodium hydroxide (1.2Kg, 30M) in water (4.5L) was added over 1hr 40min to a stirred refluxing solution (102-103°C) of H₃PO₃(820g, 10M) and sodium hydroxide (800g, 20M) in water (2L). Over this period a solution of ammonium persulphate [684g, 20mol% (w.r.t. maleic acid)] in water (1.3L) was added dropwise. After these additions the reaction mixture was refluxed for 15mins and then a further 5mol% ammonium persulphate solution (171g in 330ml water) was added dropwise over 30min. After a further 30min reflux the solution was allowed to cool slowly. A ³¹P n.m.r. spectrum of this reaction mixture (D₂O) showed that 88% of the phosphorous acid had reacted and that 5% had been oxidised to H₃PO₄. 40% by wt. of the organo-phosphonic acids present was phosphonosuccinic acid (n=1) and 60% by wt. higher homologues with n>1. A¹H. n.m.r. spectrum indicated that approximately 85% of the disodium maleate had reacted. The average value of n is therefore approximately 1.5. The product contains about 2% by weight of sodium phosphate.

### Example 2:

A solution of maleic acid (174g, 1.5M) and sodium hydroxide (120g, 3M) in water (450ml) was added dropwise over 1hr 20min to a stirred refluxing solution of H₃PO₃(82g, 1M) and sodium hydroxide (80g, 2M) in water (200ml). During this period sodium persulphate (71.4g, 20mol% w.r.t. maleic acid) was added in portions to the reaction mixture. After these additions the solution was refluxed for 15 minutes and then another 5 mol% of sodium persulphate (17.99) was added over 30 mins. The solution obtained was refluxed for a further 30 mins and then allowed to cool to room temperature. ³¹P and ¹H n.m.r. spectroscopy indicated a product identical to the first example.

### Example 3:

A solution of acrylic acid (72g, 1M) and sodium hydroxide (40g, 1M) in water (200ml) was added dropwise over 0.75h to a stirred refluxing solution of phosphorous acid (8.2g, 0.1 M) and sodium hydroxide (8g, 0.2M) in water (100ml). During this time sodium persulphate (47.6g, 20mol% wrtto the acrylic acid) was added portionwise. The solution obtained was boiled for 0.25h and then sodium persulphate (10g) was added over 0.25h to this boiling solution. ³¹P n.m.r. spectral data indicated that 30mol% of the phosphorous acid had been oxidised to phosphate; the remainder had reacted with the acrylic acid to produce a phosphonate material. A ¹³C n.m.r. spectrum indicated that all the acrylate had reacted. The product must therefore contain ca. 14 acrylic acid units to each phosphorus.

### Example 4:

A solution of acrylic acid (9g, 0.125M), maleic acid (14.5g, 0.125M) and sodium hydroxide (15g, 0.375M) in water (250ml) was added dropwise over one hour to a stirred refluxing solution of phosphorous acid (10.3g, 0.125M) and sodium hydroxide (10g, 0.25M) in water (100ml). During this period sodium persulphate (11.9g, 20mol% wrt olefins) was added portionwise. The solution obtained was refluxed for 0.25hr and then allowed to cool to room temperature. A ³¹P n.m.r. spectrum indicated that 67mol% of the H₃PO₃ had reacted to give material containing PC bonds and 13mol% had been oxidised to phosphate. ¹³C and ¹H n.m.r. spectral data indicated that all the acrylic acid and ca. 90% of the maleic acid had reacted. Therefore the material formed has 1.5 acrylic acid and 1.3 maleic acid units to each phosphorus.

### Example 5:

The product of Example 1 was tested for scale inhibition in comparison with sodium phosphonosuccinate and PTCB using the aragonite test (Test Method No 1 above). The test results are listed in Table 1, expressed as ppm of the 100% inhibitor. The test was repeated in the presence of 3 ppm chlorine and again after the product had been exposed to 3ppm chlorine dioxide for 1 hour at 60°C with identical results.

The results of a test of tube blocking with aragonite scale (Test Method No 2 above) are also recorded in Table 1.

The product was steam distilled and no phosphorus was detected in the distillate.

**Table 1**

| **Test** | **Example 1** | **Phosphonosuccinate** | **PTCB** |
|---|---|---|---|
| Aragonite (Test No 1) | 1.4-1.5 | 4.7-4.8 | 1.0-1.1 |
| Tube Blocking (Test No 2) | 0.5-0.6 | 1.0-1.4 | 0.8-1.0 |

### Example 6

Vinyl sulphonic acid (100g of a 30%w/w solution of the sodium salt, 0.23M) was added dropwise over 0.25h to a refluxing stirred solution of phosphorous acid (6.28g, 0.07M) and sodium hydroxide (6.12g, 0.15M) in water (100ml). During this period sodium persulphate (10.99, 20mol% w.r.t. vinyl sulphonic acid) was added portionwise. The reaction mixture was boiled for a further 0.5h. ³¹P n.m.r. analysis of the reaction mixture indicated that 82mol% of the phosphorous acid had reacted to give organo-phosphorus materials. All the remaining phosphorous acid had been oxidised to phosphate. ¹³C n.m.r. data indicated that all the vinyl sulphonic acid had reacted and therefore that the product contained on average 3.7 vinyl sulphonic acid groups to each phosphorus.

### Example 7

A solution of allyl alcohol (58g, 1M) in water (500ml) was added dropwise over 5h 10min to a stirred refluxing solution of phosphorous acid (82g, 1M) and sodium hydroxide (80g, 2M) in water (200ml). During this period sodium persulphate (59.5g, 25mol% w.r.t. the allyl alcohol) was added portionwise. The product obtained as analysed by ³¹P and ¹³C n.m.r. spectrscopy. This indicated that ca. 71mol% of the phosphorous acid had reacted and ca.14mol% had been oxidised to phosphate. All the allyl alcohol had reacted, therefore the product obtained contains an average of 1.4 allyl alcohol units to each phosphorus.

### Example 8

A solution of vinyl phosphonic acid (19.3g 0.18M) and sodium hydroxide (14.3g, 0.36M) in water (200ml) was added dropwise over 2.75h to a stirred refluxing solution of phosphorous acid (5.19, 0.062M) and sodium hydroxide (4.93gm. 0.123m) in water (100ml). A solution of sodium persulphate (8.8g, ca.20mol% w.r.t. the vinyl phosphonic acid) in water (65ml) was added simultaneously over the same period. After these additions the reaction mixture was boiled for ca. 1.5h and then a solution of sodium persulphate (4g) in water (25ml) was added dropwise over 0.5h. ³¹P n.m.r spectroscopy of the reaction mixture indicated that all the vinyl phosphonic acid had polymerised and that ca. 25-30% of the phosphorous acid had been incorporated into the product polymeric mixture. The remaining unreacted phosphorous acid had been oxidised to phosphate.

### Example 9

A solution of maleic acid (116g, 1M), sodium hydroxide (106g, 2.65m) and phosphorous acid (12.5g, 0.15M) in water (450ml) was heated to 95°C in a boiling water bath. Sodium persulphate (60g, 0.25M) was added in small portions at 5 minute intervals to the well stirred solution over a period of eight hours. A further portion of sodium hydroxide (5.5g) was added after 5 hours to keep the solution alkaline and prevent rapid oxygen evolution when the persulphate was added. Analysis of the product as in Example One showed that 17% of the phosphorous acid used had been converted to phosphate, 9% remained unreacted, 26% had been converted to phosphonosuccinic acid and the remainder to polymeric species. The average n was 5.2.

### Example 10

A solution of maleic acid (110Kg, 950M) and sodium hydroxide (170Kg of a 47% aqueous solution, 2000M) in water (255Kg) was added slowly over 3h to a stirred refluxing solution of phosphorous acid (60 Kg, 732M) and sodium hydroxide (125Kg of a 47% solution, 147M) in water (90Kg). 100L of a solution of sodium persulphate (67.9Kg, 285M(30mol% w.r.t. maleate)) in water (116Kg) (150L in total) was added simultaneously over the same period. The reaction mixture was refluxed for 1h after which the remaining sodium persulphate solution (50L) was added over 0.5h. Refluxing was continued for a further 3h after which the reaction was allowed to cool. Analysis of the product indicated a very similar composition to that described in Example One, ca. 84mol% of the phosphorus acid had reacted and 12mol% had been oxidised to phosphate.

### Example 11:

The product of Example 1 was tested against sodium phosphonosuccinate, a mixture of equal parts by weight sodium phosphosuccinate and sodium polymaleate, PTCB and HPP in corrosion inhibition tests "calcium only" (Test Method No 3 above) and "zinc only" (Test Method No 4 above). The results in mm/yr are recorded in Table 2.

**Table 2**

| **Inhibitor** | **Ca++3.5hrs** | **Ca++20hrs** | **Zn++3.5hrs** | **Zn++20hrs** |
|---|---|---|---|---|
| Blank | 0.270 | -- | -- | -- |
| Sodium Phosphonosuccinate | 0.135 | -- | -- | -- |
| Sodium Phosphonosuccinate and Sodium polymaleate | 0.069 | 0.068 | -- | -- |
| Example 1 | 0.048 | 0.020 | 0.021 | 0.020 |
| PTCB | 0.064 | 0.079 | -- | -- |
| HPP | 0.025 | 0.008 | 0.246 | 0.160 |

### Example 12:

The product of examples 1, 3 and 4 were compared using test methods 1, 2 and 3(above). The results are reported in the following Table 3.

**Table 3**

| **Inhibitor** | **Example 1** | **Example 3** | **Example 4** |
|---|---|---|---|
| Test No. 1 | 2.3 | 5-10 | 2.7-2.9 |
| Test No. 2 | 1.4 | 2.4-2.8 | 1.0-1.2 |
| Test No. 3 | | | |
| (i) after 3½ hours | 0.048 | 0.037 | 0.029 |
| (ii) after 20 hours | 0.02 | 0.03 | 0.021 |

### Example 13

The product of Example 1 was found to give 100% inhibition of barium sulphate scale after 4 hours at a level of 50ppm. in water at 90°C containing 126mg l⁻¹ barium ion and 1210mg l⁻¹ sulphate ion at pH6.5 (determined at 25°C). The inhibition after 24 hours was 82%.

### Example 14

A solution of propargyl alcohol (28g, 0.5M), made up to 500ml with water was added dropwise over 6h to a stirred refixing solution of phosphorous acid (82g, 1.0M) and sodium hydroxide (80g, 2.0M) in water (200ml). The reaction was maintained under an atmosphere of nitrogen. During the addition period sodium persulphate (ca. 48g) was added portionwise (about 8g h⁻¹). A further 10g of sodium persulphate was then added over about 0.5h. Water (ca 500ml) was added and about 500ml was distilled from the reaction mixture to remove any propargyl alcohol as an azeotrope with water. The dark brown solution obtained was analysed by ³¹Pn.m.r. spectroscopy (in D₂O). The reaction consists of ca. 70mol% organo-phosphorus compounds; the majority of which (ca. 80%) is 1,2-diphosphono 3-hydroxy-propane. The remaining 30mol% of phosphorus was ca. half oxidised to phosphate and half remained as unreacted phosphorous acid. ¹³C n.m.r. data was consistent with the product outlined above.

### Example 15

The product of example 14 was taken without purification and tested for scale and corrosion inhibition as follows:-

### (a) Scaling (Test method 1)

The product of Example 14 provided 100% inhibition of aragonite scale at a concentration of 1.0 - 1.2 mg.1⁻¹ total active expressed as phosphonic acid.

This is sufficient to indicate commercial utility as a scale inhibitor.

### (b) Corrosion Inhibitor (Test method No. 3)

After a contact time of 3.5 hours the corrosion rate was measured at 0.043mm/yr. After 20 hours the corrosion rate was measured as 0.029mm/yr. This indicates potential commercial utility as corrosion inhibitor.

Corrosion inhibition has been observed at concentrations below 10ppm, which correspond to the levels of HPP required. The novel compounds of the invention moreover retain their activitly in chlorinated water systems, systems, unlike HPP.

### Example 16

In a field test, an open recirculating cooling water system in a chemical manufacturing plant was operating under the following conditions;

| | |
|---|---|
| rate of circulation | 120m³/hr |
| cooling tower inlet temp. | 33°C |
| cooling tower outlet temp. | 25°C (at 18.3°C wet bulb) |
| heat load | 4x10⁶KJ/hr |
| make up water | 3600kg/hr |
| blowdown | 2300kg/hr |
| acid dose rate (36%HCI) | 0.313 Kg/hr |
| product of Example 1 (dose rate) | 0.72Kg/hr |
| pH of Cooling water | 6.8 |
| conductivity | 1050 microsiemens |
| product of Example 1 (concentrations) | 55mg l⁻¹ |
| calcium hardness | 260mg l⁻¹ |
| total hardness | 340mg l⁻¹ |
| chloride | 260mg l⁻¹ |
| tolyltriazole (copper corrosion inhibitor | 1.0mg l⁻¹ |

A continuous corrosion probe gave measurements of the corrosion between 0.025 and 0.076mm per year. Coupons of mild steel and copper were suspended in the cooling water. After 25 days the coupons were retrieved and weighed. The steel coupon was found to have lost metal at a rate equivalent to 0.034mm/year. The copper coupon lost metal at a rate equivalent to 7.6x10⁻⁴ mm/yr.

The foregoing corrosion rate qualifies as "excellent" protection according the standard defined in "Cooling Water Treatment - a Code of Practice," P62, Appendix A4, Section L, published in 1982 by the Industrial Water Society.

### Example 17

A solution of methacrylic acid (43g, 0.5M) and sodium hydroxide (20g, 0.5M) in water (300ml) was added dropwise over 3h to a stirred refluxing solution of phosphorous acid (13.7g, 0.17M) and sodium hydroxide (13.4g, 0.33M) in water (100ml). Sodium persulphate (23.8g, 20mol% w.r.t. the methacrylic acid) was added portionwise over this period. After this a further 0.5M of methacrylic acid and 20mol% of sodium persulphate were added in a like manner. A ³¹P n.m.r. spectrum indicated that ca. 61% of the phosphorous acid had reacted to give organophosphorus materials. ¹³C n.m.r. indicated that all the methacrylic acid had reacted and therefore that the resulting product contains on average 10 methacrylate units to each phorphorus.

### Example 18

A solution of butyn-1,4-diol(10.8g, 0.125M) in water (200ml) was added dropwise over 5h to a stirred refluxing solution of phosphorous acid (20.55g, 0.25M) and sodium hydroxide (20g, 0.5M) in water (100ml). Over this period a solution of sodium persulphate (11.9g) in water (130ml) was added simulataneously. A ³¹Pn.m.r spectrum of this reaction mixture indicated that ca. 11% of the phosphorous acid had been converted to organophosphorus compounds.

### Example 19

A solution of acetylene dicarboxylic acid (mono potassium salt) (50g, 0.329M) and sodium hydroxide (13.2g, 0.329M) in water (150ml) was added dropwise over 5h to a stirred refluxing solution of phosphorous acid (53.9g, 0.658M) and sodium hydroxide (52.6g, 1.316M) in water(200ml). Over a period of 6h (starting at the same time as the acetylene dicarboxylic acid addition) a solution of sodium persulphate (31.3g) in water (130ml) was also added.

A ³¹P n.m.r. spectrum of the reaction mixture indicated that ca. 30mol% of the phosphorous acid had reacted to give organophosphorus compounds.

### Example 20

A solution of acetylene carboxylic acid (10.1g, 0.144M) and sodium hydroxide (5.8g, 0.144M) in water (200ml) was added dropwise over 5.5h to a stirred refluxing solution of phosphorus acid (23.66g, 0.288M) and sodium hydroxide (23.0g, 0.575M) in water (150ml). A solution of sodium persulphate (13.7g) in water (130ml) was also added simultaneously over this period. The reaction mixture obtained was studied by ³¹P and ¹³C n.m.r. spectroscopy. This indicated that ca. 85mol% of the phosphorous acid had reacted to give organophosphorus compounds and 12mol% had been oxidised to phosphate. The main organophosphorus component (which contained ca. 50mol% of the reacted phosphorus) was 2,3-diphosphonopropanoic acid. No acetylene carboxylic acid remained unreacted.

### Example 21

A solution of maleic acid (58g, 0.5M), phosphorous acid (41g, 0.5M), and sodium hydroxide (80g 2M) in water (300ml) was evaporated in vacuo until a ca. 75%w/w solids / 25% w/w water mixture was obtained. This mixture was heated (temperature maintained between 110 and 120°C) and stirred under an atmosphere of nitrogen. Over a period of 1h a solution of sodium persulphate (6g), 5mol% w.r.t. the maleate) in water (50ml) was added dropwise. ca. 10g of water was also distilled out of the reaction mixture during this period. After the addition the reaction mixture was allowed to cool to give a viscous clear oil. ³¹P n.m.r. Spectroscopic analysis indicated that 82% of the phosphite had reacted to give organophosphorus material.

In the following claims the word "comprises" is used to mean "contains or consists of".

## Claims

1. A method of phosphonating a compound having a carbon - carbon double or triple bond adjacent to at least one hydroxyl, carbonyl, carboxylate, sulphonate and/or phosphonate group by reacting it with a water soluble phosphite salt at a pH of at least 5 and in the presence of free radical said pH and said free radical being sufficient to convert a substantial proportion of said compound to a phosphonated derivative, and a solvent, capable of dissolving the reagents, in an amount sufficient to dissolve at least part of the reaction mixture.

2. A method according to Claim 1 wherein said solvent is an aqueous based solvent.

3. A method according to either of Claims 1 and 2; wherein said active, unsaturated compound is an ethylenically or acetylenically unsaturated alcohol or carboxylate, sulphonate or phosphonate salt which is at least sparingly soluble in a medium capable of dissolving alkali metal phosphites.

4. A method according to Claim 1 for the preparation of scaling and/or corrosion inhibitors, which comprises heating: (1) an aqueous solution of at least one water soluble carboxy, hydroxy, sulphono or phosphono olefin having the general formula R₂C=CR₂, wherein at least one R group is a COOM, CH₂OH, SO₃M or PO₃M₂ group and each of the other R groups may be the same or different and each represents hydrogen or an aliphatic hydrocarbon or substituted hydrocarbon group, or in which two of the R groups together form a cycloalkyl or cycloalkenyl group, or part thereof, and M is a cation such that the olefin is water soluble; with (2) a water soluble salt of phosphorus acid; in the presence of (3) sufficient free radicals to form a phosphonated oligomer of said olefin.

5. A method according to Claim 4 wherein said olefin comprises an alkali metal maleate, acrylate and/or methacrylate.

6. A method according to Claim 1 wherein the reaction occurs substantially in an aqueous medium having a neutral or alkaline pH.

7. A method according to Claim 6 wherein the initial pH is 7 to 9.

8. A method according to any foregoing claim wherein said acetylenic compound is an alkali metal propiolate, or buta-2,3-yne-1,4-dioate.

9. A method according to any foregoing claim wherein the amount of free radical initiator is from 1 to 30% molar based on the unsaturated compound.

10. A method according to any foregoing claim wherein the amount of solvent present is insufficient to dissolve all of the reaction mixture at room temperature but sufficient to provide a stirrable composition under reaction conditions.

11. A method according to Claim 10 wherein the reagents are substantially all dissolved in an aqueous solvent and the solution evaporated to provide said composition, prior to and/or during the reaction.

12. A method according to either of Claims 9 and 10 wherein said reaction mixture contains from 50 to 20% by weight total solvent.

13. A method according to Claim 11 wherein from 1 to 10% molar of free radical initiator compound is added to the reaction mixture, either initially, or continuously or intermittently over a period of from 0.25 to 24 hours.

14. A method according to any of Claims 1 to 8 wherein the composition contains from 20 to 50% by weight of the total composition of an aqueous based solvent.

15. A method according to Claim 14 wherein from 10 to 30% by weight of free radical source, based on the weight of the unsaturated compound is added to the reaction mixture continuously or intermittently over a period of 0.25 to 24 hours.

16. A method according to any foregoing claim wherein the free radical source is a persulphate.

17. A method according to any foregoing claim wherein the reaction temperature is maintained between 5°C and 250°C, during at least part of the reaction.

18. A method according to Claim 17 wherein the temperature is maintained between 80 and 150°C.

19. A method according to Claim 17 where the reaction is effected at the boiling point of the mixture.

20. A method according to any of Claims 17 to 19 wherein the reaction is effected under elevated pressure.

21. A method according to Claim 20 wherein the reaction is effected in an autoclave.

22. A method according to any foregoing claim performed under an inert atmosphere.

23. A method according to Claim 22 in which the inert atmosphere is nitrogen.

24. A method according to any foregoing claim wherein the reaction medium is water.

25. A method according to any foregoing claim wherein the reaction medium comprises a water-miscible solvent.

26. A method according to Claim 25 wherein said solvent comprises methanol, ethanol, isopropanol, ethylene glycol, a water soluble oligomer of ethylene glycol, propylene glycol, a water soluble oligomer of propylene glycol, a water soluble mono- or di- methyl or ethyl ether of ethylene or propylene glycol or of an oligomer of ethylene or propylene glycol, glycerol, a water soluble glyceryl ether, acetone and/or dioxan.

27. A phosphonated oligomer of maleic acid of the formula H[CHCO₂MCHCO₂M]ₙ PO₃M₂ where M is a cation such that the composition is soluble, and n is greater than 1.

28. A composition comprising homooligomers according to Claim 27 wherein n has an average value of from 1.2 to 3.

29. A composition according to Claim 28 comprising: up to 50% by weight of a phosphonosuccinate, based on the weight of the composition; a phosphonated dimer of alkali metal maleate; not more than a minor proportion by weight, based on the weight of the diner, of higher phosphonated oligomers of maleate; and from 0.5 to 5% by weight of the composition of an alkali metal phosphate of vinyl sulphonic acid having the formula H[CHSO₃MCH₂]ₙPO₃M₂ where M and n have the same significance as in claim 27.

30. The calcium salt of a product according to any of claims 27 to 29.

31. A composition comprising a product according to Claim 30 and a surfactant, biocide, sequestrant, chelating agent, foam control agent, buffer, oxygen scavenger, and/or another threshold scaling and/or corrosion inhibitor.

32. The use of a composition according to any of Claims 27 to 31 for water treatment.

33. The use of a composition according to any of Claims 27 to 31 to inhibit scale formation.

34. The use of a composition according to any of Claims 27 to 31 to inhibit corrosion.

35. A method of treating potentially scale forming or corrosive water systems which comprises adding thereto an amount between 0.1 and 100ppm of a composition according to any of Claims 27 to 31 effective to inhibit said scale formation or corrosion respectively.

36. A method according to Claim 35 wherein said water system contains chlorine, bromine, and/or chlorine dioxide.

37. A method according to either of Claims 35 and 36 for treating cooling water, boiler water, process water, water in desalination plant and water used or produced in oil fields.

38. A method according to any of Claims 35 to 37 wherein said water system contains calcium and/or zinc ions.

39. A method according to any of Claims 35 to 38 wherein said water system is capable of forming barium sulphate scale if not treated.

40. A method according to any of Claims 37 to 39 for squeeze treatment of an oil well or other borehole which comprises impregnating the formation in the neighbourhood of the hole with an aqueous solution of a product according to any of Claims 26 to 33 and 35 and forming the calcium salt thereof in situ, by reaction with calcium already in the formation and/or by subsequently impregnating the formation with an aqueous solution of a calcium salt.

41. A detergent composition comprising from 2 to 70% by weight of surfactant and from 5 to 60% by weight of builder, wherein said builder comprises from 1 to 100% of the weight thereof, of a composition according to any one of Claims 27 to 30.

42. A detergent composition according to Claim 41 comprising 5 to 50% by weight surfactant and from 10 to 45% by weight builder.

## Patentansprüche

1. Verfahren zur Phosphonisierung
einer Verbindung, die eine Kohlenstoff-Kohlenstoff-Doppelbindung oder eine Kohlenstoff-Kohlenstoff-Dreifachbindung benachbart zu wenigstens einer Hydroxyl-, Carbonyl-, Carboxylat-, Sulfonat- und/oder Phosphonat-Gruppe aufweist,
durch Umsetzung mit einem wasserlöslichen Phosphitsalz bei einem pH von wenigstens 5, in Gegenwart freier Radikale, in einem Lösungsmittel,
wobei der pH-Wert und die freien Radikale so ausreichend gewählt sind, um einen wesentlichen Anteil der Verbindung in ein phosphonisiertes Derivat umzuwandeln, und
wobei das Lösungsmittel die Reaktionspartner in einer ausreichenden Menge lösen soll, damit wenigstens ein Teil des Reaktionsgemisches gelöst vorliegt.

2. Verfahren nach Anspruch 1,
**dadurch gekennzeichnet, daß**
das Lösungsmittel ein Lösungsmittel auf wässriger Basis ist.

3. Verfahren nach Anspruch 1 oder 2,
**dadurch gekennzeichnet, daß**
die aktive, ungesättigte Verbindung ein ethylenisch oder acetylenisch ungesättigter Alkohol ist, oder ein ethylenisch oder acetylenisch ungesättigtes Carboxylatsalz, Sulfonatsalz oder Phosphonatsalz ist, der/das zumindest mäßig löslich ist in einem Medium, das Alkalimetallphosphite zu lösen vermag.

4. Verfahren nach Anspruch 1,
für die Herstellung von Mitteln zur Verhinderung von Ablagerungen, Verkrustungen und Kesselstein und/oder zur Herstellung von Korrosionsinhibitoren,
**gekennzeichnet durch** die Verfahrensschritte:
Erwärmung (1) einer wässrigen Lösung von wenigstens einer wasserlöslichen Carboxy-, Hydroxy-, Sulfono- oder Phosphono-Olefinverbindung der allgemeinen Formel R₂C=CR₂,
wobei wenigstens einer der Reste R steht für eine CH₂OH-Gruppe oder für eine COOM-, SO₃M- oder PO₃M₂-Gruppe,
wobei jeder andere Rest R gleich oder unterschiedlich sein kann und jeweils steht für Wasserstoff oder für eine aliphatische Kohlenwasserstoffgruppe oder für eine substituierte Kohlenwasserstoffgruppe, oder wobei zwei R-Gruppen gemeinsam bilden eine Cycloalkylgruppe oder eine Cycloalkenylgruppe oder einen Teil einer Cycloalkylgruppe oder einer Cycloalkenylgruppe, und
wobei M für eine solches Kation steht, damit die Olefinverbindung wasserlöslich ist;
mit (2) einem wasserlöslichen Salz einer phosphorigen Säure
in Gegenwart von (3) einer ausreichenden Menge freier Radikale, um ein phosphonisiertes Oligomer der Olefinverbindung zu bilden.

5. Verfahren nach Anspruch 4,
**dadurch gekennzeichnet, daß**
die Olefinverbindung ist ein Alkalimetallmaleat, ein Alkalimetallacrylat und/oder ein Alkalimetallmethacrylat.

6. Verfahren nach Anspruch 1,
**dadurch gekennzeichnet, daß**
die Umsetzung im wesentlichen in einem wässrigen Medium durchgeführt wird, das einen neutralen oder alkalischen pH-Wert aufweist.

7. Verfahren nach Anspruch 6,
**dadurch gekennzeichnet, daß**
das Medium anfänglich einen pH-Wert von 7 bis 9 aufweist.

8. Verfahren nach einem der Ansprüche 1 bis 7,
**dadurch gekennzeichnet, daß**
die acetylenisch ungesättigte Verbindung ein Alkalimetallpropiolat oder ein Alkalimetallbuta-2,3-yn-1,4-dioat ist.

9. Verfahren nach einem der Ansprüche 1 bis 8,
**dadurch gekennzeichnet, daß**
der Anteil an einer Quelle für freie Radikale 1 bis 30 Mol-% beträgt, bezogen auf die ungesättigte Verbindung.

10. Verfahren nach einem der Ansprüche 1 bis 9,
**dadurch gekennzeichnet, daß**
der Anteil an vorhandenem Lösungsmittel nicht ausreicht, um das gesamte Reaktionsgemisch bei Raumtemperatur zu lösen, dieser Anteil jedoch ausreicht, unter den Reaktionsbedingungen eine rührbare Zusammensetzung zu bilden.

11. Verfahren nach Anspruch 10,
**dadurch gekennzeichnet, daß**
im wesentlichen alle Reaktionspartner in einem wässrigen Lösungsmittel gelöst sind, und diese Lösung eingedampft wird, um vor und/oder während der Umsetzung diese Zusammensetzung zu bilden.

12. Verfahren nach Anspruch 9 oder 10,
**dadurch gekennzeichnet, daß**
der Gesamtgehalt an Lösungsmittel 50 bis 20 Gew.-% der Reaktionsmischung ausmacht.

13. Verfahren nach Anspruch 11,
**dadurch gekennzeichnet, daß**
1 bis 10 Mol-% der als Quelle der freien Radikale dienenden Verbindung dem Reaktionsgemisch zugesetzt werden, entweder am Anfang, oder kontinuierlich oder intermittierend über einen Zeitraum von 0,25 bis 24 Stunden.

14. Verfahren nach einem der Ansprüche 1 bis 8,
**dadurch gekennzeichnet, daß**
20 bis 50 Gew.-% der gesamten Zusammensetzung aus einem Lösungsmittel auf wässriger Basis bestehen.

15. Verfahren nach Anspruch 14,
**dadurch gekennzeichnet, daß**
10 bis 30 Gew.-% der Quelle für freie Radikale, bezogen auf das Gewicht der ungesättigten Verbindung, dem Reaktionsgemisch kontinuierlich oder intermittierend über einen Zeitraum von 0,25 bis 25 Stunden zugesetzt werden.

16. Verfahren nach einem der Ansprüche 1 bis 15,
**dadurch gekennzeichnet, daß**
die Quelle für freie Radikale ein Persulfat ist.

17. Verfahren nach einem der Ansprüche 1 bis 16,
**dadurch gekennzeichnet, daß**
während wenigstens eines Teiles der Umsetzung die Reaktionstemperatur zwischen 5°C und 250°C gehalten wird.

18. Verfahren nach Anspruch 17,
**dadurch gekennzeichnet, daß**
die Reaktionstemperatur zwischen 80°C und 150°C gehalten wird.

19. Verfahren nach Anspruch 17,
**dadurch gekennzeichnet, daß**
die Umsetzung beim Siedepunkt des Reaktionsgemisches durchgeführt wird.

20. Verfahren nach einem der Ansprüche 17 bis 19,
**dadurch gekennzeichnet, daß**
die Umsetzung unter einem erhöhten Druck durchgeführt wird.

21. Verfahren nach Anspruch 20,
**dadurch gekennzeichnet, daß**
die Umsetzung in einem Autoklaven durchgeführt wird.

22. Verfahren nach einem der Ansprüche 1 bis 21,
**dadurch gekennzeichnet, daß**
die Umsetzung unter einer inerten Atmosphäre durchgeführt wird.

23. Verfahren nach Anspruch 22,
**dadurch gekennzeichnet, daß**
die inerte Atmosphäre eine Stickstoffatmosphäre ist.

24. Verfahren nach einem der Ansprüche 1 bis 23,
**dadurch gekennzeichnet, daß**
das Reaktionsmedium Wasser ist.

25. Verfahren nach einem der Ansprüche 1 bis 23,
**dadurch gekennzeichnet, daß**
das Reaktionsmedium ein mit Wasser mischbares Lösungsmittel ist oder enthält.

26. Verfahren nach Anspruch 25,
**dadurch gekennzeichnet, daß**
das Lösungsmittel aus der nachstehenden Gruppe ausgewählt ist, umfassend Methanol, Ethanol, Isopropanol, Ethylenglycol, ein wasserlösliches Oligomer von Ethylenglycol, Propylenglycol, ein wasserlösliches Oligomer von Propylenglycol, ein wasserlöslicher Mono- oder Di- Methyl- oder -Ethyl-Äther von Ethylenglycol oder Propylenglycol oder eines Oligomers von Ethylenglycol oder Propylenglycol, Glycerol, ein wasserlöslicher Glycerinäther, Aceton und/oder Dioxan.

27. Phosphoniertes Oligomer der Maleinsäure,
entsprechend der nachstehenden Formel
H[CHCO₂MCHCO₂M]ₙPO₃M₂
wobei "M" jeweils für ein solches Kation steht, damit die Zusammensetzung löslich ist, und
"n" einen Wert größer 1 hat.

28. Homo-Oligomere enthaltende Zusammensetzung nach Anspruch 27,
**dadurch gekennzeichnet, dass**
"n" einen mittleren Wert von 1,2 bis 3 hat.

29. Zusammensetzung nach Anspruch 28,
**gekennzeichnet durch** einen Gehalt an:
bis zu 50 Gew.-% Phosphonosuccinat, bezogen auf das Gewicht der Zusammensetzung;
einem phosphonierten Dimer von Alkalimetallmaleat;
nicht mehr als einem minimalen Gewichtsanteil, bezogen auf das Gewicht des Dimers, an höheren phosphonierten Oligomeren des Maleat; und
- bezogen auf das Gewicht der Zusammensetzung -
0,5 bis 5 Gew.-% Alkalimetallphosphat einer Vinylsulphonsäure mit der nachstehenden Formel
H [CHSO₃MCH₂]ₙPO₃M₂
wobei "M" und "n" die gleiche Bedeutung haben, wie in Anspruch 27 angegeben.

30. Phosphoniertes Oligomer nach einem der Ansprüche 27 bis 29,
**dadurch gekennzeichnet, dass**
das Oligomer als Calziumsalz vorliegt.

31. Zusammensetzung,
**gekennzeichnet durch** einen Gehalt an
einem Produkt nach Anspruch 30 und zusätzlich wenigstens einem grenzflächenaktiven Stoff, einem Tensid, einem Biocid, einem Komplexbildner, einem Gelatbildner, einem, die Schaumbildung kontrollierendem Mittel, einer Puffersubstanz, einem Sauerstoff-Fänger und/oder andere Mittel, die bereits in einer Schwellenwertkonzentration Ablagerungen, Verkrustungen und Kesselsteinbildung verhindern und/oder als Korrosionsinhibitor wirken.

32. Anwendung einer Zusammensetzung nach einem der Ansprüche 27 bis 31,
zur Wasserbehandlung.

33. Anwendung einer Zusammensetzung nach einem der Ansprüche 27 bis 31,
zur Verminderung oder Verhinderung von Ablagerungen, Verkrustungen und/oder Kesselsteinbildung.

34. Anwendung einer Zusammensetzung nach einem der Ansprüche 27 bis 31,
zur Verminderung oder Verhinderung von Korrosion.

35. Verfahren zur Behandlung von Wassersystemen, in denen möglicherweise Ablagerungen, Verkrustungen und/oder Kesselsteinbildung auftreten können und/oder in denen Korrosion auftreten kann
**dadurch gekennzeichnet, dass**
dem Wasser in dem Wassersystem in einer Menge zwischen 0,1 und 100 ppm eine Zusammensetzung nach einem der Ansprüche 27 bis 31 zugesetzt wird, um wirksam eine Bildung von Ablagerungen, Verkrustungen und/oder Kesselstein und/oder Korrosionserscheinungen zu vermindern oder zu verhindern.

36. Verfahren nach Anspruch 35,
**dadurch gekennzeichnet, dass**
das Wassersystem Chlor, Brom und/oder Chlordioxid enthält.

37. Verfahren nach Anspruch 35 oder 36,
zur Behandlung von Kühlwasser, Boilerwasser, Prozeßwasser, Wasser in Entsalzungsanlagen und/oder von Wasser, das in Erdölfördergebieten gebraucht oder erzeugt wird.

38. Verfahren nach einem der Ansprüche 35 bis 37,
**dadurch gekennzeichnet, dass**
das Wassersystem Calziumionen und/oder Zinkionen enthält.

39. Verfahren nach einem der Ansprüche 35 bis 38,
**dadurch gekennzeichnet, dass**
in dem Wassersystem - sofern es nicht behandelt wird - die Gefahr der Bildung von Bariumsulfat-Ablagerungen besteht.

40. Verfahren nach einem der Ansprüche 37 bis 39 zur Wasserdruck-Auspreßbehandlung einer Erdölbohrung oder eines anderen Bohrloches,
**dadurch gekennzeichnet, dass**
die Gesteinsformation in der Nachbarschaft des Bohrloches mit einer wässrigen Lösung imprägniert wird, welche ein Produkt nach einem der Ansprüche 26 bis 31 enthält,
wobei die Bildung eines Calziumsalzes dieses Produktes in situ erfolgt durch Umsetzung mit Calziumquellen, die bereits in der Gesteinsformation vorhanden sind und/oder durch nachfolgende Imprägnierung der Gesteinsformation mit einer wässrigen Lösung eines Calziumsalzes.

41. Detergentium-Zusammensetzung
**gekennzeichnet durch** einen Gehalt an
2 bis 70 Gew.-% grenzflächenaktives Mittel (Tensid) und
5 bis 60 Gew.-% Gerüstbildner (builder),
wobei dieser Gerüstbildner in einem Anteil von 1 bis 100 Gew.-%, bezogen auf das Gewicht des Gerüstbildners, eine Zusammensetzung nach einem der Ansprüche 27 bis 30 enthält.

42. Detergentium-Zusammensetzung nach Anspruch 41,
**gekennzeichnet durch** einen Gehalt an
5 bis 50 Gew.-% grenzflächenaktives Mittel (Tensid) und
10 bis 45 Gew.-% Gerüstbildner (builder).

## Revendications

1. Procédé de phosphonation d'un composé ayant une double ou triple liaison carbone - carbone adjacente à au moins un radical hydroxyle, carbonyle, carboxylate, sulfonate et/ou phosphonate par réaction de celui-ci avec un phosphite soluble dans l'eau à un pH d'au moins 5 et en présence de radicaux libres, ledit pH et lesdits radicaux libres étant suffisants pour convertir une proportion substantielle dudit composé en dérivé phosphonaté, et un solvant, capable de dissoudre les réactifs, dans une quantité suffisante pour dissoudre au moins une partie du mélange de réaction.

2. Procédé selon la revendication 1 dans lequel ledit solvant est un solvant à base aqueuse.

3. Procédé selon l'une quelconque des revendications 1 et 2 dans lequel ledit composé actif, insaturé est un alcool ou un carboxylate, un sulfonate ou un phosphonate éthyléniquement ou acétyléniquement insaturé qui est au moins soluble avec modération dans un milieu capable de dissoudre les phosphites des métaux alcalins.

4. Procédé selon la revendication 1 pour la préparation d'inhibiteurs d'entartrage et/ou de corrosion, qui comprend le chauffage : (1) d'une solution aqueuse d'au moins une carboxy, hydroxy, sulfono ou phosphonooléfine ayant la formule générale R₂C=CR₂, dans laquelle au moins un radical R est un radical COOM, CH₂OH, SO₃M ou PO₃M₂ et chacun des autres radicaux R peut être identique ou différent et chacun représente l'hydrogène ou un radical hydrocarboné aliphatique ou un radical hydrocarboné substitué, ou dans lequel deux des radicaux R forment conjointement un radical cycloalcoyle ou cycloalcényle, ou une partie de ceux-ci, et M est un cation tel que l'oléfine soit soluble dans l'eau; avec (2) un sel soluble dans l'eau de l'acide phosphoreux; en présence de (3) des radicaux libres suffisants pour former un oligomère phosphonaté de ladite oléfine.

5. Procédé selon la revendication 4 dans lequel ladite oléfine comprend un maléate, un acrylate et/ou un méthacrylate de métal alcalin.

6. Procédé selon la revendication 1 dans lequel la réaction se produit en grande partie dans un milieu aqueux ayant un pH neutre ou alcalin.

7. Procédé selon la revendication 6 dans lequel le pH initial est de 7 à 9.

8. Procédé selon l'une quelconque des revendications précédentes dans lequel ledit composé acétylénique est un propiolate ou le buta-2,3-yne-1,4-dioate de métal alcalin.

9. Procédé selon l'une quelconque des revendications précédentes dans lequel la quantité d'initiateur de radicaux libres est de 1 à 30% molaire par rapport au composé insaturé.

10. Procédé selon l'une quelconque des revendications précédentes dans lequel la quantité de solvant présent est insuffisante pour dissoudre tout le mélange de réaction à température ambiante mais est suffisante pour fournir une composition susceptible d'être agitée dans les conditions de réaction.

11. Procédé selon la revendication 10 dans lequel les réactifs sont en grande partie tous dissous dans un solvant aqueux et la solution est évaporée pour fournir ladite composition, avant et/ou durant la réaction.

12. Procédé selon l'une quelconque des revendications 9 et 10 dans lequel ledit mélange de réaction contient 50 à 20% en poids de solvant total.

13. Procédé selon la revendication 11 dans lequel 1 à 10% molaires du composé initiateur de radicaux libres sont ajoutés au mélange de réaction, soit initialement, soit de manière continue ou intermittente sur une période de 0,25 à 24 heures.

14. Procédé selon l'une quelconque des revendications 1 à 8 dans lequel la composition contient 20 à 50% en poids de la composition totale d'un solvant à base aqueuse.

15. Procédé selon la revendication 14 dans lequel 10 à 30% en poids de la source de radicaux libres, par rapport au poids du composé insaturé, sont ajoutés au mélange de réaction de manière continue ou intermittente sur une période de 0,25 à 24 heures.

16. Procédé selon l'une quelconque des revendications précédentes dans lequel la source de radicaux libres est un persulfate.

17. Procédé selon l'une quelconque des revendications précédentes dans lequel la température de réaction est maintenue entre 5°C et 250°C, durant au moins une partie de la réaction.

18. Procédé selon la revendication 17 dans lequel la température est maintenue entre 80 et 150°C.

19. Procédé selon la revendication 17 dans lequel la réaction est effectuée à la température d'ébullition du mélange.

20. Procédé selon l'une quelconque des revendications 17 à 19 dans lequel la réaction est effectuée sous pression élevée.

21. Procédé selon la revendication 20 dans lequel la réaction est effectuée dans un autoclave.

22. Procédé selon l'une quelconque des revendications précédentes effectué sous atmosphère inerte.

23. Procédé selon la revendication 22 dans lequel l'atmosphère inerte est l'azote.

24. Procédé selon l'une quelconque des revendications précédentes dans lequel le milieu de réaction est l'eau.

25. Procédé selon l'une quelconque des revendications précédentes dans lequel le milieu de réaction comprend un solvant miscible à l'eau.

26. Procédé selon la revendication 25 dans lequel ledit solvant inclut le méthanol, l'éthanol, l'isopropanol, l'éthylèneglycol, un oligomère soluble dans l'eau d'éthylèneglycol, le propylèneglycol, un oligomère soluble dans l'eau de propylèneglycol, un éther soluble dans l'eau mono- ou di-méthylique ou -éthylique d'éthylène- ou de propylèneglycol ou d'un oligomère d'éthylène- ou de propylèneglycol, le glycérol, un éther glycérylique soluble dans l'eau, l'acétone et/ou le dioxanne.

27. Oligomère phosphonaté d'acide maléique de formule H[CHCO₂MCHCO₂M]ₙPO₃M₂ dans laquelle M est un cation tel que la composition est soluble et n est plus grand que 1.

28. Composition comprenant des homooligomères selon la revendication 27 dans laquelle n a une valeur moyenne de 1,2 à 3.

29. Composition selon la revendication 28 comprenant : jusqu'à 50% en poids d'un phosphonosuccinate, par rapport au poids de la composition; un dimère phosphonaté de maléate de métal alcalin; pas plus d'une proportion mineure en poids, par rapport au poids du dimère, d'oligomères phosphonatés supérieurs de maléate; et de 0,5 à 5% en poids de la composition d'un phosphate de métal alcalin d'acide vinylsulfonique de formule H[CHSO₃MCH₂]ₙPO₃M₂ où M et n ont la même signification que dans la revendication 27.

30. Sel de calcium d'un produit selon l'une quelconque des revendications 27 à 29.

31. Composition comprenant un produit selon la revendication 30 et un surfactant, un biocide, un séquestrant, un agent de chélation, un agent de contrôle de mousse, un tampon, un absorbeur d'oxygène, et/ou un autre inhibiteur d'entartrage de seuil et/ou de corrosion.

32. Utilisation d'une composition selon l'une quelconque des revendications 27 à 31 pour le traitement de l'eau.

33. Utilisation d'une composition selon l'une quelconque des revendications 27 à 31 pour inhiber la formation de dépôt.

34. Utilisation d'une composition selon l'une quelconque des revendications 27 à 31 pour inhiber la corrosion.

35. Procédé de traitement de systèmes de formation potentielle de dépôt ou de systèmes d'eau corrosifs qui comprend l'addition d'une quantité entre 0,1 et 100 ppm d'une composition selon l'une quelconque des revendications 27 à 31 efficace pour inhiber respectivement lesdites formation de dépôt ou corrosion.

36. Procédé selon la revendication 35 dans lequel ledit système d'eau contient du chlore, du brome, et/ou du dioxyde de chlore.

37. Procédé selon l'une quelconque des revendications 35 et 36 pour traiter l'eau de refroidissement, l'eau de chaudière, l'eau de traitement, l'eau des usines de dessalement et l'eau utilisée ou produite dans les champs pétrolifères.

38. Procédé selon l'une quelconque des revendications 35 à 37 dans lequel ledit système d'eau contient des ions de calcium et/ou de zinc.

39. Procédé selon l'une quelconque des revendications 35 à 38 dans lequel ledit système d'eau est capable de former un dépôt de sulfate de baryum s'il n'est pas traité.

40. Procédé selon l'une quelconque des revendications 37 à 39 pour le traitement par pressage d'un puits de pétrole ou d'un autre trou de forage qui comprend l'imprégnation de la conformation dans le voisinage du trou avec une solution aqueuse d'un produit selon l'une quelconque des revendications 26 à 29 et 31 et la formation du sel de calcium in situ, par réaction avec le calcium déjà dans la conformation, et/ou subséquemment l'imprégnation de la conformation avec une solution aqueuse d'un sel de calcium.

41. Composition détergente comprenant 2 à 70% en poids de surfactant et 5 à 60% en poids d'adjuvant, dans laquelle ledit adjuvant comprend à raison de 1 à 100% de son poids, une composition selon l'une quelconque des revendications 27 à 30.

42. Composition détergente selon la revendication 41 comprenant 5 à 50% en poids de surfactant et de 10 à 45% en poids d'adjuvant.
